# EUROPEAN PATENT APPLICATION

(11) **EP 1 107 435 A1**
(43) Date of publication of application: **13.06.2001**
(21) Application number: 99919601.7
(22) Date of filing: 14.05.1999
(51) Int. Cl.: H02K 29/00, H02K 21/22

(54) **COMPATIBLE DISK DRIVE MOTOR**

(71) Applicant: MITSUBISHI DENKI KABUSHIKI KAISHA, Tokyo 100-8310 (JP)
(72) Inventor: MUROTANI, Kiichiro, Mitsubishi Electric E. Co. Ltd, Chiyoda-ku, Tokyo 100-0004 (JP); MICHIMORI, Atsushi, Mitsubishi Denki Kabushiki, Chiyoda-ku, Tokyo 100-8310 (JP); INATANI, Takeshi, Mitsubishi Denki Kabushiki, Chiyoda-ku, Tokyo 100-8310 (JP); TAKESHIMA, Masaaki, Mitsubishi Denki Kabushiki, Chiyoda-ku, Tokyo 100-8310 (JP)
(74) Representative: Pfenning, Meinig & Partner
(86) International application number: JP9902532
(87) International publication number: WO0070728

(57) **Abstract**

A bearing (4) is mounted on a base (1) to retain a portion of the shaft (6) ranging from near a lower end portion to near an upper end portion, and a rotor housing (10) is provided with a rotor base (11) disposed at a level lower than that of an optical pickup (13) with a magnet (9) being provided on an inner peripheral surface, and a rotor boss (12) formed separately from the rotor base (11). The rotor boss (12) has a smaller outer radius than the outer radius of the rotor base (11) and is fixed on the rotor base (11) so that a side face is opposite to a side face of the optical pickup (13). Thus, it is possible to prevent run-out of the shaft (6) and to downsize the device with a simple structure. Furthermore, it is possible to use components 1, 2, 5, 9, 11 and the like in common with thin motors used with other types of device and thus manufacturing costs are greatly reduced.

## Description

### TECHNICAL FIELD

The present invention relates to a motor adapted for use with a compatible disk device, the compatible disk device being capable of selectively playing a plurality of types of disks such as a compact disk (hereafter CD) and a minidisk (hereafter MD).

### BACKGROUND ART

Recently, compatible disk devices being capable of selectively playing a plurality of types of circular disks such as a compact disk (hereafter CD) and a minidisk (hereafter MD) have appeared on the market. This type of compatible disk device is adapted to determine a position of a disk by a turntable or the like fixed to the shaft of a spindle motor and to rotate freely. The compatible disk device is provided with an optical pickup which is disposed opposite the signal recorded surface formed on the reverse side of the disk and reads a recorded signal by scanning in a radial direction.

In general, an MD has a smaller radius than a CD and as a result the signal recording section is positioned further in an inner peripheral section (on a central section) in comparison with the CD. Thus, it is necessary for the optical pickup to scan further into an inner peripheral section than when a CD is played.

In order to maintain the scanning range of the optical pickup, it is necessary to provide a spindle motor in a position where the spindle motor does not interfere with the optical pickup. Thus, a spindle motor with a large outer radius can not be disposed at approximately the same height as the position of the optical pickup.

In comparison with only playing an MD, a spindle motor capable of generating a larger torque is required to play a CD which has a larger radius than the MD. For example, as shown below, an oblong type spindle motor with a small radius or an elongated shaft type spindle motor with a large radius must be used.

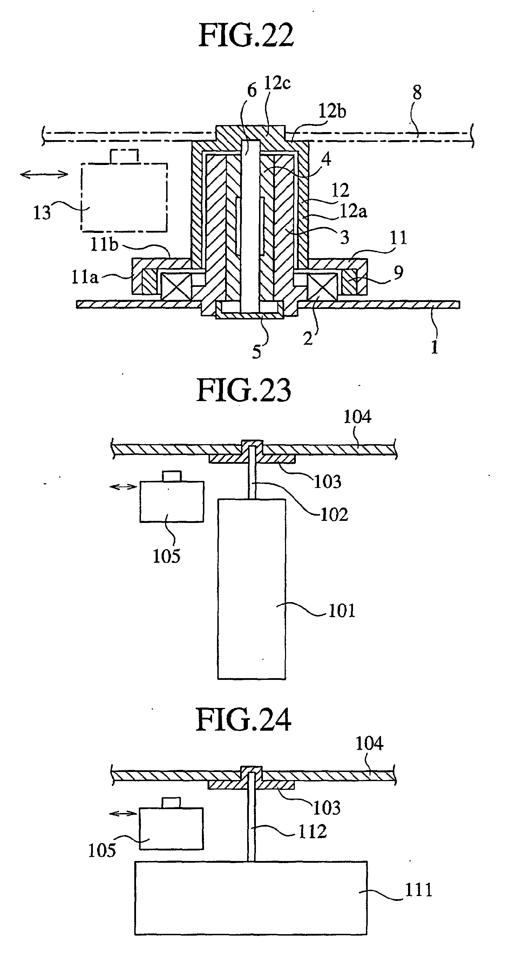

Fig. 23 is a schematic view showing an example of an oblong type conventional spindle motor with a small radius as adapted to a compatible disk device. Fig. 24 is a schematic view showing an example of an elongated shaft type conventional spindle motor with a large radius as adapted to a compatible disk device.

In Fig. 23, reference numeral 101 denotes an oblong type spindle motor with a small radius, and 102 is a shaft which is supported to rotate freely by a bearing (not shown in the figure) provided in the spindle motor 101. 103 is a turntable fixed to the shaft 102. 104 is a disk such as an MD or a CD. 105 is an optical pickup disposed opposite to a rear face of the disk 104 and adapted to freely scan in a radial direction of the disk 104. That is to say, the compatible disk device is adapted to avoid interference with the optical pickup 105 by the provision of the spindle motor 101 with a reduced outer radius and thus to enlarge the scanning range of the optical pickup 105 on the inner peripheral side of the disk 104.

In Fig. 24, reference numeral 111 denotes an elongated shaft type spindle motor with a large diameter. The shaft 112 is supported in free rotation by a bearing (not shown in the figure) provided in the spindle motor 111. That is to say, the compatible disk device is adapted to protrude the shaft 112 higher than the level of the optical pickup 105. Thus, the compatible disk device is adapted to avoid interference with the optical pickup 105 by the disposition of the optical pickup 105 above the spindle motor 111, thereby to enlarge the scanning range of the optical pickup 105 on the inner peripheral side of the disk 104.

A conventional compatible disk device adapted for use with the spindle motor is disclosed for example in JP-A-7-296473.

The operation of the conventional compatible disk device will be described below.

A disk 104 is rotated by the spindle motor 101, 111. The optical pickup 105 moves in the radial direction of the disk 104 and reads the recorded signal.

Since a motor for use with the conventional compatible disk device is constructed as above, when an oblong type of spindle motor 101 with a small radius is used, it is necessary to increase the width of the entire compatible disk device which creates the problem of increased dimensions for the device.

On the other hand, when an elongated shaft type of spindle motor 111 with a large radius is used, although the width of the device overall may be reduced, it is necessary to decrease the span of the bearing of the shaft 112 which creates the problem that it is difficult to prevent run-out of the shaft 112.

The present invention is proposed to solve the above problems and has the object of preventing run-out of the shaft and of reducing the size of the device with a simple structure. Furthermore, the present invention has the object of producing a motor adapted for use with a compatible disk device with a simple method of manufacture.

### DISCLOSURE OF THE INVENTION

According to the present invention, a bearing member is mounted on a base to hold at least a portion from near a lower end portion to near an upper end portion of a shaft, and a rotor housing is provided with a rotor base which is disposed at a level lower than that of the optical pickup and has a magnet on its inner peripheral surface, and a rotor boss which is formed separately from the rotor base with a smaller outer radius than the outer radius of the rotor base and is fixed on the rotor base so that a side face is opposite to a side face of the optical pickup.

In such a way, it is possible to prevent run-out of the shaft and to reduce the size of the device with a simple structure. Furthermore, the device can be manufactured in an easily manner. Also, manufacturing costs are greatly reduced as the above arrangement can be applied easily to the manufacture of thin motors used with other types of devices.

According to the present invention, the rotor boss may be integrated with the turntable.

In such a way, the number of components can be reduced and thus the efficiency of assembly operations can be improved.

Further, according to the present invention, the coil may be provided on the base.

This arrangement facilitates the formation of a current carrying means to the coil.

Furthermore, according to the present invention, the rotor boss may be integrated with the turntable while providing the coil on the base.

In such a way, the number of components can be reduced and thus the efficiency of assembly operations can be improved. This also facilitates the formation of a current carrying means to the coil.

### BRIEF DESCRIPTION OF THE DRAWINGS

Fig. 1 is a cross sectional view of a motor for a compatible disk device according to a first embodiment of the present invention.

Fig. 2 is a perspective view showing a stator section of the motor.

Fig. 3 is a plan view of Fig. 2.

Fig. 4 is a side view of Fig.2 in the direction of the arrow A.

Fig. 5 is a side view of Fig.2 in the direction of the arrow B.

Fig. 6 is a side view showing a rotor section of the motor.

Fig. 7 is a bottom view showing a rotor section of the motor.

Fig. 8 is a perspective view showing the bottom face of a rotor section of the motor.

Fig. 9 is a perspective view showing the components of the motor.

Fig. 10 is a plan view of Fig. 9.

Fig. 11 is a side view of Fig. 9 in the direction of the arrow C.

Fig. 12 is a side view of Fig. 9 in the direction of the arrow D.

Fig. 13 is a perspective view of the motor on which an optical pickup is arranged.

Fig. 14 is a plan view of Fig. 13.

Fig. 15 is a side view of Fig. 13 in the direction of the arrow F.

Fig. 16 is a side view of Fig. 13 in the direction of the arrow G.

Fig. 17 is a cross sectional view showing a motor for designated use with CD disks.

Fig. 18 is a perspective view showing a motor for designated use with CD disks.

Fig. 19 is a plan view of Fig. 18.

Fig. 20 is a side view of Fig. 18 in the direction of the arrow H.

Fig. 21 is a side view of Fig. 18 in the direction of the arrow I.

Fig. 22 is a cross sectional view of a motor for a compatible disk device according to a second embodiment of the present invention.

Fig. 23 is a schematic view showing an example of an oblong type conventional spindle motor with a small radius as adapted to a compatible disk device.

Fig. 24 is a schematic view showing an example of an elongated shaft type conventional spindle motor with a large radius as adapted to a compatible disk device.

### BEST MODE FOR CARRYING OUT THE INVENTION

In order to describe the present invention in greater detail, the preferred embodiments will be outlined below with reference to the accompanying figures.

### Embodiment 1

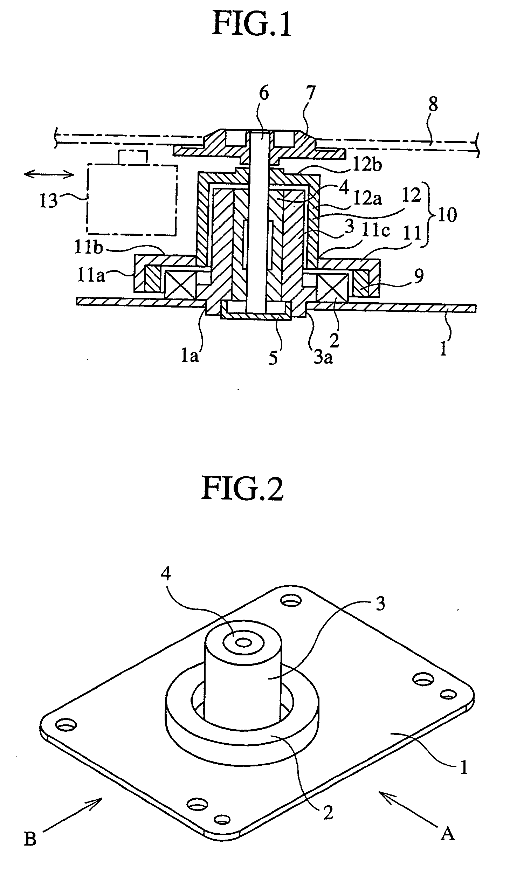

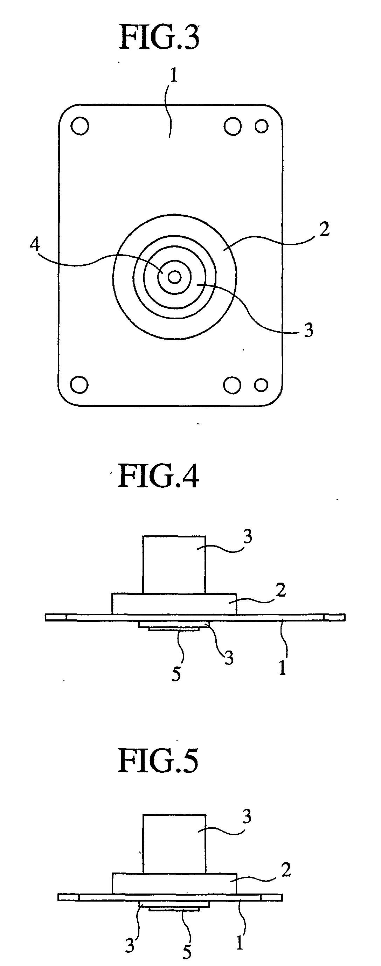

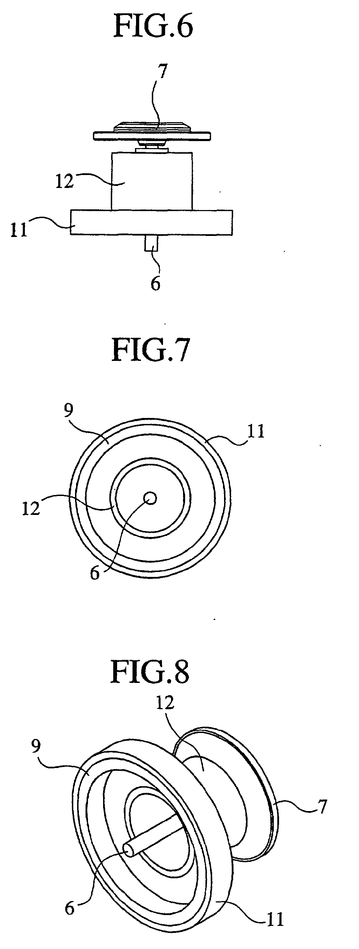

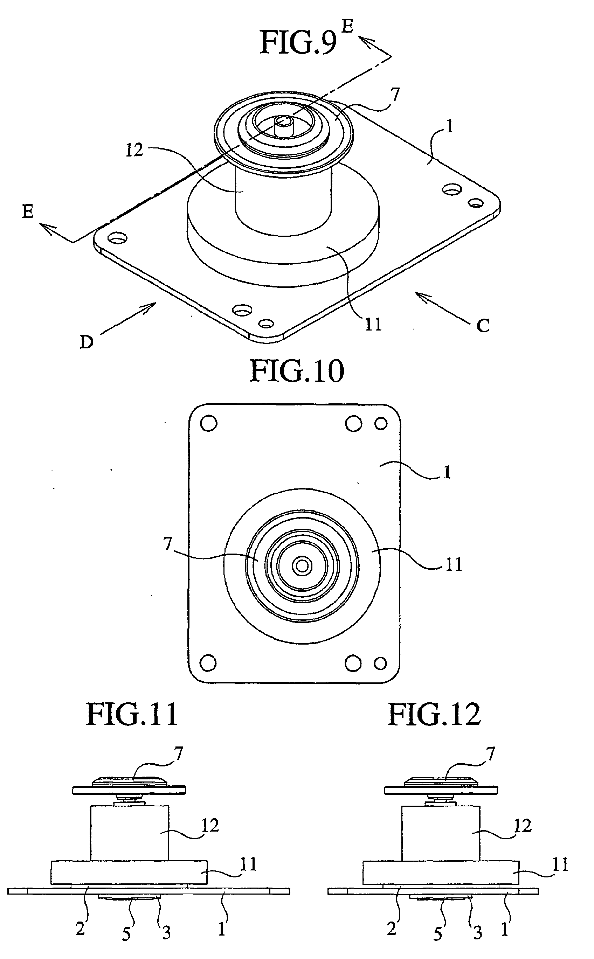

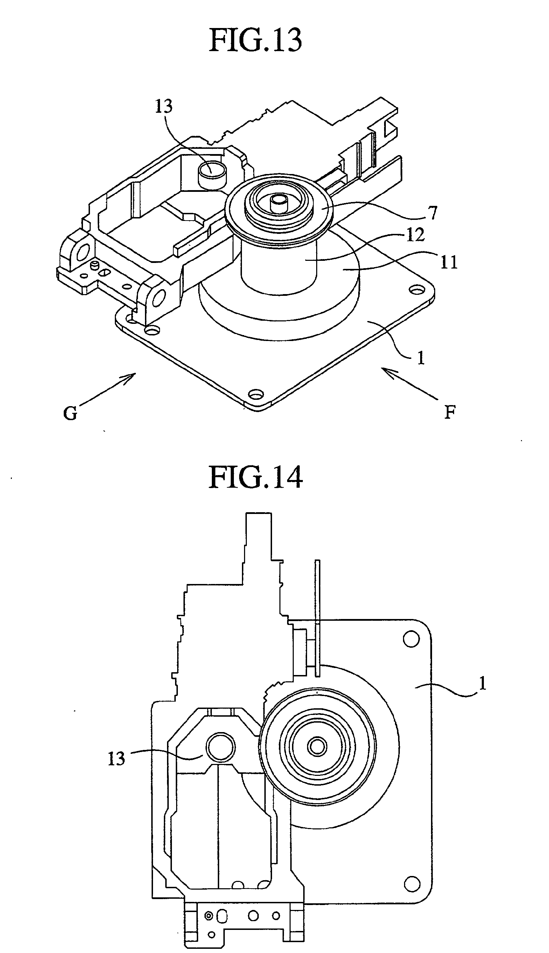

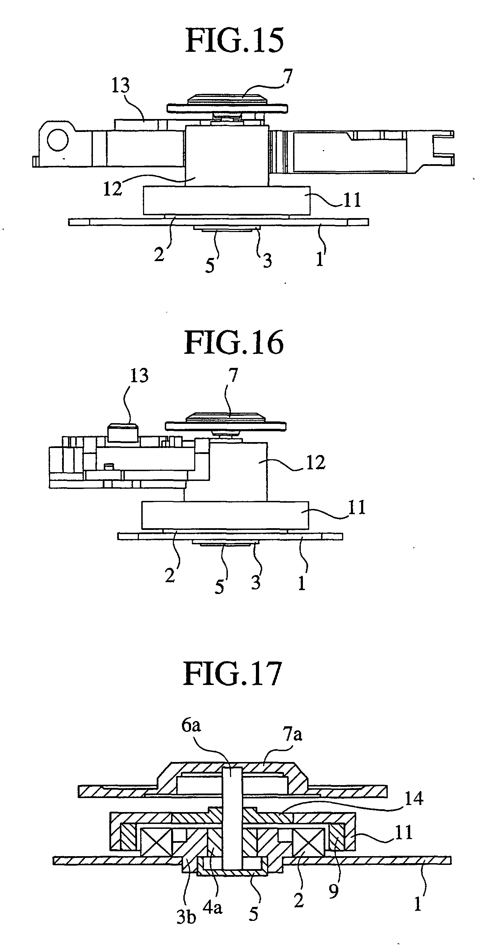

Fig. 1 is a cross sectional view showing a motor for a compatible disk device according to a first embodiment of the present invention. Fig. 2 is a perspective view showing a stator section of the motor. Fig. 3 is a plan view of Fig. 2. Fig. 4 is a side view of Fig. 2 in the direction of the arrow A. Fig. 5 is a side view of Fig. 2 in the direction of the arrow B. Fig. 6 is a side view of a rotor section of the motor. Fig. 7 is a bottom view showing a rotor section of the motor. Fig. 8 is a perspective view showing the bottom face of a rotor section of the motor. Fig. 9 is a perspective view showing the components of the motor. Fig. 10 is a plan view of Fig. 9. Fig. 11 is a side view of Fig. 9 in the direction of the arrow C. Fig. 12 is a side view of Fig. 9 in the direction of the arrow D. Fig. 13 is a perspective view of the motor on which an optical pickup is arranged.. Fig. 14 is a plan view of Fig. 13. Fig. 15 is a side view of Fig. 13 in the direction of the arrow F. Fig. 16 is a side view of Fig. 13 in the direction of the arrow G.

Firstly, the stator section will be described.

In the accompanying figures, reference numeral 1 denotes a base with an engagement hole 1a, 2 is a ring-shaped coil for generating a magnetic field which is disposed on the base 1. The coil 2 is disposed around a lower end portion of a holder 3 which is discussed below. The coil 2 can be controlled by a control circuit (not shown in the figures). 3 is a tubular-shaped holder (bearing member) which retains a tubular-shaped bearing 4 (bearing member). The holder 3 is mounted on the base 1 by the engagement of the engagement section 3a with the engagement hole la of the base 1. 5 is a cap which is inserted and fitted into an aperture formed in the lower end portion of the holder 3 to thus cover the aperture. The bearing 4 is formed by a low friction material so that the shaft 6 (described below) can rotate freely. Furthermore, the bearing 4 is adapted to hold a portion from near a lower end portion to near an upper end portion of the shaft 6.

Next, the rotor section will be described below.

In the figures, reference numeral 6 denotes a shaft which is held to rotate freely by the bearing 4. 7 is a turntable which is fixed to an upper end of the shaft 6 and which is adapted to hold various types of disks, such as the MD and CD. The mechanism of loading or clamping the disk 8 is formed by a method well known in the art which is not shown in the figures. 9 is a ring-shaped magnet which is provided on an inner peripheral surface of the rotor base 11 (which is discussed below) so that it faces the coil 2.

10 is a rotor housing of thin metallic plate which is fixed to the shaft 6 so as to store the bearing 4 and the holder 3. The rotor housing 10 is composed of a rotor base 11 and a rotor boss 12 in order to ensure an operational space for the optical pickup 13 which displaces in a radial direction of the disk 8 held by the turntable 7 and reads the recorded information.

That is to say, the rotor base 11 has a lidded tubular shape which is composed of a tubular portion 11a and a flat portion 11b closing an upper end of the tubular portion 11a. A circular opening portion 11c is provided on the flat portion 11b. The magnet 9 is arranged on an inner surface of the tubular portion 11a.

The rotor boss 12 is formed separately from the rotor base 11. The rotor boss has a lidded tubular shape which is composed of a tubular portion 12a having a smaller outer radius than the outer radius of the tubular portion 11a of the rotor base 11 and a flat portion 12b dosing an upper end of the tubular portion 12a. The lower end of the tubular portion 12a is fixed to the opening portion 11c of the rotor base 11 for example by caulking or welding. The flat portion 12b is fixed to the shaft 6 at its center.

The rotor housing 10 is disposed in such a manner that the flat portion 11b of the rotor base 11 is disposed below the optical pickup 13 and the tubular portion 12a of the rotor boss 12 is opposite to a lateral face of the optical pickup 13.

Next, the operation of the present invention will be described below.

The rotor housing 10, the shaft 6 and the turntable 7 rotate together due to a magnetic field created by the coil 2 and the magnet 9. As a result, the disk 8 rotates. The optical pickup 13 displaces in the radial direction of the disk 8 under the control of a control circuit (not shown in the figures) and reads the recorded signals. When the disk 8 is an MD, the recorded signals are recorded further towards an inner peripheral section of the disk 8 in comparison with a CD. However, since the outer radius of the rotor boss 12 is smaller than an outer radius of the rotor base 11, the operational space for the optical pickup 13 is ensured.

A large torque can be generated by a large magnet 9 disposed in the tubular portion 11a of the rotor base 11 which has a large outer radius. Namely, the larger torque required when playing a CD than that required when playing a MD can be easily generated by the motor of the compatible disk device.

Furthermore, the bearing 4 supports a portion of the shaft 6 which ranges from near a lower end to near an upper end of the shaft 6, and the bearing span is enlarged in comparison with a conventional device. Thus, it is possible to prevent the run-out of the shaft 6.

As described above, according to a first embodiment of the present invention, it is possible to prevent the run-out of the shaft and to reduce the size of the device by a simple construction which also allows easy manufacturing of the device.

In particular, in comparison with integrating the manufacture of the rotor base 11 and the rotor boss 12 by a deep drawing die process, the formation of the rotor housing 10 by coupling the two members of the rotor base 11 and the rotor boss 12 allows reductions in manufacturing costs since die manufacturing costs are reduced as components are easily removed from the die.

Further, since the coil 2 is provided on the base 1, the formation of a current carrying means to the coil 2 is facilitated.

Furthermore, the advantageous effect is obtained that components may be used in common with a motor for disk device for designated use with CD. This will be described on the basis of the examples given in the figures.

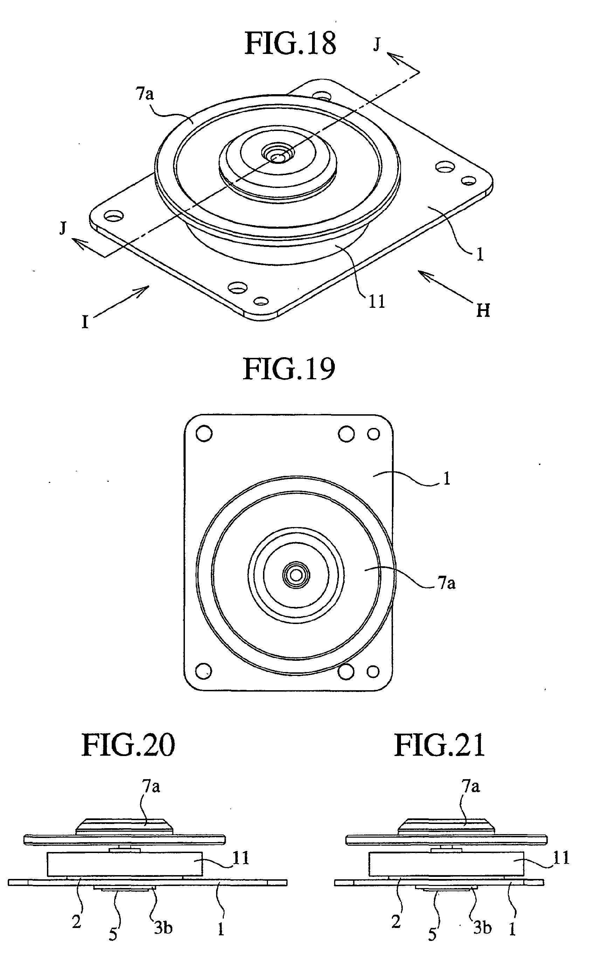

Fig. 17 is a cross sectional view showing a motor for disk device which is used exclusively with CD. Fig. 18 is a perspective view showing the motor for disk device which is used exclusively with CD. Fig. 19 is a plan view of Fig. 18. Fig. 20 is a side view of Fig. 18 in the direction of the arrow H. Fig. 21 is a side view of Fig. 18 in the direction of the arrow I. In the description below, members which are the same as or similar to those already explained will be omitted from the description.

In the figures, 3b is a holder which retains the bearing 4a, 6a is a shaft, 7a is a turntable, 14 is a circular plate which is disposed on the rotor base 11 instead of the rotor boss 12.

Thus, when manufacturing a disk device motor for designated use with CD, the different components to be newly introduced are only the holder 3b, the bearing 4a, the shaft 6a, the turntable 7a and the circular plate 14. Namely, the other components can be used in common for the manufacturing of a motor for a compatible disk device. Therefore, it is possible to greatly reduce the manufacturing costs of the thin type motors which may be used with other types of device.

In the first embodiment, the present invention was described as being adapted to a disk device for playing disks. However, the present invention may obviously be simply adapted to disk recording devices or to playing/recording disk devices.

### Embodiment 2

Fig. 22 is a cross section view showing a motor for a compatible disk device according to a second embodiment of the present invention.

In the figure, reference numeral 12c denotes a turntable section which is adapted to hold a plurality of types of disks 8 such as an MD and a CD. The turntable section 12c is integrated with a flat portion 12b of the rotor boss 12.

The basic operation and other functions are the same as those in the first embodiment and so the explanation will be omitted.

As shown above, according to the second embodiment of the present invention, since a turntable section 12c is integrated with the rotor boss 12, the advantageous effect is obtained of reducing the number of components and improving efficiency of the assembly operation.

### INDUSTRIAL APPLICABILITY

As described above, a motor for a compatible disk device according to the present invention is adapted to use with a compatible disk device which requires a low cost and small size.

## Claims

1. A motor for a compatible disk device comprising:
a stator section having a coil and a bearing member; and
a rotor section having a shaft supported to rotate freely by said bearing member, a turntable fixed to a tip of said shaft and adapted to hold a plurality of types of disks, and a rotor housing having a magnet which faces said coil and fixed to said shaft so that said coil and said bearing member are housed,
said bearing member being mounted on a base and adapted to support at least a portion from near a lower end portion to near an upper end portion of the shaft,
said rotor housing including:
a rotor base disposed at a level lower than that of an optical pickup in order to ensure an operational space for said optical pickup, said optical pickup operating in a radial direction of the disk placed on said turntable and reading recorded information, said magnet being provided on an inner peripheral surface of the rotor base; and
a rotor boss formed separately from said rotor base, said rotor boss having a smaller outer radius than an outer radius of said rotor base and being fixed on said rotor base so that a side face thereof is faced with a side face of said optical pickup.

2. The motor according to Claim 1, wherein said rotor boss is integrated with said turntable.

3. The motor according to Claim 1, wherein said coil is provided on said base.

4. The motor according to Claim 2, wherein said coil is provided on said base.
